# EUROPÄISCHE PATENTSCHRIFT

(11) **EP 2 924 394 B1**
(45) Veröffentlichungstag und Bekanntmachung des Hinweises auf die Patenterteilung: **24.10.2018**
(21) Anmeldenummer: 15154311.3
(22) Anmeldetag: 09.02.2015
(51) Int. Cl.: G01D 3/032, E01C 19/28

(54) **Verfahren zur Korrektur eines Messwerteverlaufs durch das Eliminieren periodisch auftretender Messartefakte bei einem Bodenverdichter**
Method for correcting changes in measurement values by eliminating periodical measurement artefacts in a soil compactor
Procédé de correction d'un tracé d'une valeur de mesure par élimination d'artéfacts de mesure périodiques pour un rouleau compresseur

(30) Priorität: 25.03.2014 DE 102014205503
(43) Veröffentlichungstag der Anmeldung: 30.09.2015
(73) Patentinhaber: Hamm AG, 95643 Tirschenreuth (DE)
(72) Erfinder: Pistrol, Johannes, 2340 Mödling (AT); Kopf, Fritz, 1140 Wien (AT); Völkel, Werner, 92660 Neustadt (DE); Villwock, Sebastian, 95701 Pechbrunn (DE)
(74) Vertreter: Ruttensperger Lachnit Trossin Gomoll

(56) Entgegenhaltungen:
- EP-A2- 1 219 932
- WO-A1-2013/087783
- DE-A1- 19 814 763
- DE-A1-102007 040 912
- DE-C2- 3 590 610
- US-A- 5 343 707

## Beschreibung

Die vorliegende Erfindung betrifft ein Verfahren, mit welchem beispielsweise bei einem zumindest eine Verdichterwalze aufweisenden Bodenverdichter, welcher sich zum Verdichten von Untergrund, wie z.B. Kies, Asphalt oder Erdreich, über diesen Untergrund hinweg bewegt, in einem die Bewegung der Verdichterwalze repräsentierenden Messwerteverlauf enthaltene Messartefakte eliminiert werden können.

Die zum Verdichten von Untergrund eingesetzten Bodenverdichter weisen im Allgemeinen Verdichterwalzen auf, die nicht nur durch ihre statische Auflast zur Verdichtung des Untergrunds beitragen, sondern auch durch der Rotationsbewegung dieser Verdichterwalzen überlagerte hochfrequente periodische Oszillationsbewegungen, also Bewegungen in Umfangsrichtung der Verdichterwalze, bzw. Vibrationsbewegungen, also Bewegungen in Auf-AbRichtung. Zum Erzeugen dieser der Rotation überlagerten Bewegungsanteile sind im Inneren der Verdichterwalzen Unwuchtmassen und Antriebe dafür vorgesehen. Aufgrund dieser zusätzlichen Massen ist das Auftreten von statischen bzw. dynamischen Unwuchten nahezu unvermeidbar. Dies führt dazu, dass der Rotationsbewegung der Verdichterwalzen eine durch diese Unwuchten hervorgerufene periodische Bewegung überlagert ist, deren Periode im Allgemeinen der Periode bzw. Frequenz der Rotationsbewegung entspricht.

Soll beispielsweise durch Erfassen des Bewegungszustandes einer derartigen Verdichterwalze auf den Verdichtungsgrad des zu verdichtenden Untergrunds geschlossen werden, ist es erforderlich, sehr präzise Information über den Bewegungszustand, also beispielsweise die Beschleunigung, einer Verdichterwalze zu erhalten. Die durch derartige Unwuchten hervorgerufenen Messartefakte in dem die Bewegung einer derartigen Verdichterwalze wiedergegebenen Messwerteverlauf beeinträchtigen die Auswertbarkeit eines derartigen Messwerteverlaufs z.B. zur Erlangung von Information über den Verdichtungsgrad des Untergrunds.

Die US 5 343 707 A offenbart ein Verfahren zum Entfernen von zyklischem Rauschen aus dem Ausgangssignal eines Magnetfeldsensors, der beispielsweise dazu eingesetzt werden kann, das aufgrund der Herzfunktion eines Menschen generierte Biomagnetfeld zu erfassen. Bei diesem bekannten Verfahren wird das von dem Magnetfeldsensor gelieferte Signal zunächst gemittelt. Das gemittelte Signal wird von dem Sensorsignal subtrahiert, um somit eine im Wesentlichen das Rauschen repräsentierende Signalform zu erhalten. Auch diese das Rauschen repräsentierende Signalform wird erneut gemittelt um eine gemittelte das Rauschen repräsentierende Signalform zu erhalten. Durch Subtrahieren der gemittelten das Rauschen repräsentierenden Signalform vom Ausgangssignal, also dem ursprünglich vom Magnetfeldsensor gelieferten Signal, wird ein von Rauschen im Wesentlichen befreites Endsignal erhalten.

Es ist die Aufgabe der vorliegenden Erfindung, ein Verfahren vorzusehen zur Korrektur eines Messwerteverlaufs, mit dem in einfacher, gleichwohl zuverlässiger Weise periodisch auftretende Messartefakte eliminiert werden können.

Erfindungsgemäß wird diese Aufgabe gelöst durch ein Verfahren zur Korrektur eines Messwerteverlaufs durch das Eliminieren periodisch auftretender Messartefakte bei einem die Bewegung einer Verdichterwalze eines Bodenverdichters repräsentierenden Messwerteverlauf, umfassend die Maßnahmen:
a) Bereitstellen eines ein periodisch sich wiederholendes Ereignis repräsentierenden Messwerteverlaufs,
b) Aufteilen des Messwerteverlaufs in einer Mehrzahl von aufeinander folgenden Perioden des periodisch sich wiederholenden Ereignisses zugeordnete Perioden-Messwerteverläufe,
c) beruhend auf den der Mehrzahl von Perioden zugeordneten Perioden-Messwerteverläufen, Ermitteln eines mittleren Perioden-Messwerteverlaufs,
d) Bilden einer Differenz zwischen den der Mehrzahl von Perioden zugeordneten Perioden-Messwerteverläufen und dem mittleren Perioden-Messwerteverlauf zum Bereitstellen von den Perioden jeweils zugeordneten Differenz-Perioden-Messwerteverläufen,
e) beruhend auf den Differenz-Perioden-Messwerteverläufen, Bestimmen eines korrigierten Messwerteverlaufs für die Mehrzahl aufeinander folgender Perioden des periodisch sich wiederholenden Ereignisses.

Bei dem erfindungsgemäßen Verfahren wird ein jeweiliger Messwerteverlauf in seine beispielsweise jeweils einer Umdrehung einer Verdichterwalze als periodisch sich wiederholendes Ereignis entsprechenden Perioden aufgeteilt. Für jede dieser Perioden findet eine Korrektur unter Berücksichtigung eines für diese Perioden erzeugten mittleren Perioden-Messwerteverlaufs statt. Alle korrigierten Perioden-Messwerteverläufe können dann wieder zu einem gesamten, korrigierten Messwerteverlauf zusammengefügt werden, der zur weitergehenden Auswertung, beispielsweise bezüglich des Verdichtungsgrades des zu verdichtenden Untergrunds, zur Verfügung steht.

Da über eine längere Bewegungsdauer hinweg das gesamte Niveau des Messwerteverlaufs sich verändern kann, die verschiedenen Perioden-Messwerteverläufe also auf unterschiedlichem Niveau liegen können, ist weiter vorgesehen, dass die Maßnahme b) eine Maßnahme b2) umfasst zum Subtrahieren eines für jeden Perioden-Messwerteverlauf ermittelten Perioden-Messwerteverlaufsmittelwertes von dem zugeordneten Perioden-Messwerteverlauf zum Bereitstellen von verschobenen Perioden-Messwerteverläufen. Um nach der eigentlichen Korrektur, also dem Bilden der Differenz-Perioden-Messwerteverläufe, zu gewährleisten, dass am Ende der korrigierte Messwerteverlauf wieder im Wesentlichen auf dem gleichen Niveau liegt, wie der zu korrigierende Messwerteverlauf, ist weiter vorgesehen, dass die Maßnahme e) eine Maßnahme e1) umfasst zum Ermitteln rückverschobener Differenz-Perioden-Messwerteverläufe durch Addieren der Differenz-Perioden-Messwerteverläufe jeweils mit dem für die zugeordnete Periode bei der Maßnahme b2) ermittelten Perioden-Messwerteverlaufsmittelwert.

Da grundsätzlich davon auszugehen ist, dass bei der Bewegung eines Bodenverdichters über den zu verdichtenden Untergrund hinweg dieser Verdichter sich nicht immer mit gleicher Geschwindigkeit bewegen wird, also auch die Periodenlänge, also z.B. Zeitdauer, einer Umdrehung der Verdichterwalze nicht immer gleich sein wird, beispielsweise auch beeinflusst durch aufgrund der periodischen Oszillationsbewegung erzeugten Schlupf, kann die Mehrzahl von Perioden Perioden unterschiedlicher Periodenlänge umfassen, und die Maßnahme b) kann eine Maßnahme b1) umfassen zum Längennormieren der Perioden-Messwerteverläufe zum Bereitstellen von über eine gleiche Länge, also z.B. Zeitdauer, sich erstreckenden längennormierten Perioden-Messwerteverläufen. Durch das Längennormieren der zu berücksichtigenden Perioden-Messwerteverläufe wird die Möglichkeit geschaffen, in einfacher Weise aus all diesen Perioden-Messwerteverläufen einen Mittelwert, also den bereits angesprochenen mittleren Perioden-Messwerteverlauf zu generieren.

Für diese Längennormierung kann beispielsweise die Maßnahme b1) das Abtasten der Perioden-Messwerteverläufe jeweils mit einer für alle Perioden-Messwerteverläufe gleichen vorbestimmten Anzahl an äquidistanten Abtastungen umfassen, und beruhend auf den bei jedem Perioden-Messwerteverlauf erhaltenen Abtastergebnissen können längennormierte Perioden-Messwerteverläufe durch für alle Perioden-Messwerteverläufe äquidistantes aufeinander folgendes Anordnen der Abtastergebnisse derselben ermittelt werden.

Zur Ermittlung des mittleren Perioden-Messwerteverlaufs können vorteilhafterweise die bei der Maßnahme c) längennormierten oder/und verschobenen Perioden-Messwerteverläufe verwendet werden.

Zum Bilden des mittleren Perioden-Messwerteverlaufs kann beispielsweise vorgesehen sein, dass die Maßnahme c) eine Maßnahme c1) umfasst zum Bereitstellen eines Mittelwert-Perioden-Messwerteverlaufs durch Bilden eines Mittelwertes, vorzugsweise arithmetischen Mittelwertes, aus der Mehrzahl von Perioden-Messwerteverläufen.

Da im Allgemeinen Anfangs- und Endpunkt eines derartigen Mittelwert-Perioden-Messwerteverlaufs zueinander unterschiedlich sein werden, wird weiter vorgeschlagen, dass die Maßnahme c) eine Maßnahme c2) umfasst zum Aneinanderfügen mehrerer Mittelwert-Perioden-Messwerteverläufe und zum Aneinanderanpassen unmittelbar aufeinander folgender Mittelwert-Perioden-Messwerteverläufe an den Angrenzungsstellen zum Bereitstellen eines über eine Mehrzahl von, vorzugsweise wenigstens drei, Perioden stetig verlaufenden Mittelwert-Gesamt-Messwerteverlaufs. Das Aneinanderanpassen unmittelbar aufeinander folgender, zueinander grundsätzlich identischer Mittelwert-Perioden-Messwerteverläufe kann durch herkömmliche Fittingmethoden erfolgen und hat zur Folge, dass Anfangs- und Endpunkte an den jeweiligen Periodengrenzen auf gleichem Niveau zu liegen kommen. Darauf folgend kann dann weiter vorgesehen sein, dass die Maßnahme c) eine Maßnahme c3) umfasst zum Bestimmen des einer Periode des Mittelwert-Gesamt-Messwerteverlaufs zugeordneten Messwerteverlaufs als mittleren Perioden-Messwerteverlauf. Es wird also eine einzelne Periode herausgegriffen und der darin enthaltene Abschnitt des Mittelwert-Gesamt-Messwerteverlaufs als mittlerer Perioden-Messwerteverlauf herausgegriffen, so dass grundsätzlich ein Messwerteverlauf für diese Periode vorliegt, der einerseits gemittelt ist aus den verschiedenen Perioden zugeordneten Perioden-Messwerteverläufen, der andererseits so bearbeitet bzw. angepasst ist, dass Anfangs- und Endpunkte jeweils auf dem gleichen Niveau liegen. Dabei wird vorteilhafterweise bei der Maßnahme c3) auf eine Periode zugegriffen, an die beidseits jeweils eine andere Periode angrenzt, so dass sichergestellt ist, dass Anfangs- und Endpunkt des herausgegriffenen Abschnitts des Messwerteverlaufs einer Anpassung unterzogen wurden.

Des Weiteren ist es vorteilhaft, wenn die Maßnahme e) eine Maßnahme e2) umfasst zum Rücklängennormieren der Differenz-Perioden-Messwerteverläufe derart, dass die Länge jedes rücklängennormierten Differenz-Perioden-Messwerteverlaufs der Länge des in Zuordnung zu einer jeweiligen Periode bestimmten Perioden-Messwerteverlaufs vor Durchführung der Maßnahme b1) entspricht. Auf diese Art und Weise wird dafür gesorgt, dass auch im korrigierten Messwerteverlauf die einzelnen Perioden wieder diejenige Periodenlänge, also beispielsweise Periodendauer, aufweisen, die diese im als Ausgangspunkt verwendeten zu korrigierenden Messwerteverlauf hatten. Hierzu kann beispielsweise vorgesehen sein, dass bei der Maßnahme e2) jeder Differenz-Perioden-Messwerteverlauf mit der vorbestimmten Anzahl
äquidistant abgetastet wird, und dass die bei jedem Differenz-Perioden-Messwerteverlauf erhaltenen Abtastergebnisse mit einem Abstand aufeinander folgend angeordnet werden, welcher Abstand dem Abstand der äquidistanten Abtastungen bei der Maßnahme b1) entspricht. Mit dieser Maßnahme wird gewährleistet, dass nach Art einer Kehrwertbildung die zuvor zur Längennormierung durchgeführte Operation wieder rückgängig gemacht wird.

Des Weiteren kann die Maßnahme e) eine Maßnahme e3) umfassen zum Bereitstellen eines über die Mehrzahl von Perioden sich erstreckenden Differenz-Gesamt-Messwerteverlaufs als korrigierter Messwerteverlauf durch aufeinander folgendes Anordnen der für die Perioden ermittelten Differenz-Perioden-Messwerteverläufe. Hierzu werden vorteilhafterweise auf die rückverschobenen oder/und rücklängennormierten Differenz-Perioden-Messwerteverläufe verwendet, um so den Differenz-Gesamt-Messwerteverlauf, also den korrigierten Messwerteverlauf, bereitstellen zu können.

Die vorliegende Erfindung wird nachfolgend mit Bezug auf die beiliegenden Figuren detailliert beschrieben. Es zeigt:
- Fig. 1: einen beispielhaften Messwerteverlauf, welcher, über der Zeit aufgetragen, die an einer Verdichterwalze erfasste Umfangsbeschleunigung wiedergibt;
- Fig. 2: eine Mehrzahl von unmittelbar aufeinander folgenden Perioden des in Fig. 1 dargestellten Messwerteverlaufs;
- Fig. 3: eine Aufgliederung des Messwerteverlaufs der Fig. 1 bzw. der Perioden der Fig. 2 in einzelne Perioden;
- Fig. 4: eine Übereinanderlagerung der Perioden der Fig. 3 zum Darstellen der unterschiedlichen Längen der Perioden;
- Fig. 5: eine Periode der Fig. 2 und 3;
- Fig. 6: eine andere Periode der Fig. 2 und 3;
- Fig. 7: eine der Fig. 4 entsprechende Darstellung von übereinander gelagerten längennormierten Perioden;
- Fig. 8: die längennormierten und überlagert dargestellten Perioden-Messwerteverläufe jeweils verschoben um einen Perioden-Messwerteverlaufsmittelwert;
- Fig. 9: einen aus den einzelnen Perioden-Messwerteverläufen gebildeten Mittelwert-Perioden-Messwerteverlauf;
- Fig. 10: eine Aneinanderlagerung mehrerer identischer Mittelwert-Perioden-Messwerteverläufe der Fig. 9;
- Fig. 11: eine der Fig. 10 entsprechende Darstellung, bei welcher End- und Anfangspunkte der aneinander anschließend angeordneten Mittelwert-Perioden-Messwerteverläufe aneinander angepasst sind;
- Fig. 12: aus dem Diagramm der Fig. 11 einen einzelnen herausgegriffenen und einen mittleren Perioden-Messwerteverlauf repräsentierenden Messwerteverlaufsabschnitt;
- Fig. 13: einen Vergleich des in Fig. 1 dargestellten Messwerteverlaufs mit einem nach Durchführung des erfindungsgemäßen Verfahrens erhaltenen korrigierten Messwerteverlauf.

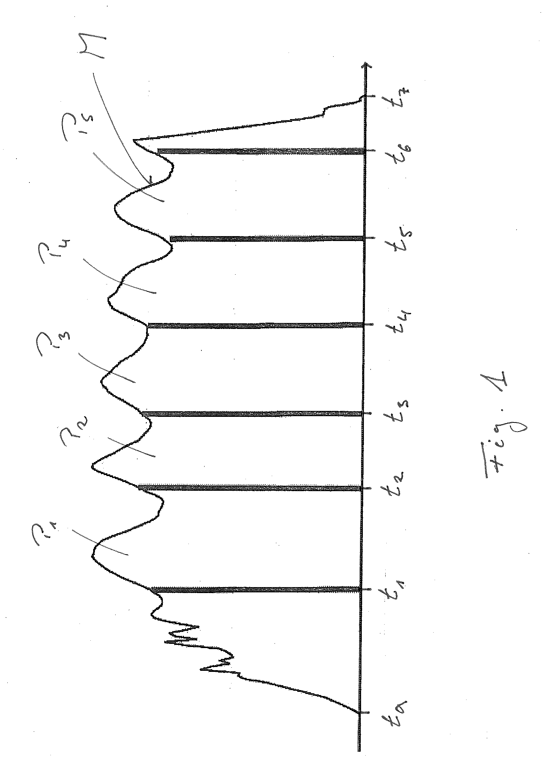

In Fig. 1 ist in beispielhafter und prinzipieller Weise ein Messwerteverlauf M dargestellt, welcher die Umfangsbewegung, also Rotationsbewegung, einer Verdichterwalze eines Bodenverdichters bei Durchführung eines Verdichtungsvorgangs repräsentiert. Der Messwerteverlauf M repräsentiert, aufgetragen über der Zeit t, beispielsweise die an einem Lager einer derartigen Verdichterwalze aufgenommene Umfangsbeschleunigung der Verdichterwalze im Verlaufe ihrer Rotationsbewegung. Dabei sei angenommen, dass die Bewegung der Verdichterwalze bzw. des eine derartige Verdichterwalze aufweisenden Bodenverdichters zu einem Anfangszeitpunkt tₐ begonnen hat und zu einem Endzeitpunkt tₑ geendet hat. Zu einem Zeitpunkt t₁ hat der Bodenverdichter einen im Wesentlichen kontinuierlichen bzw. konstanten Bewegungszustand erreicht, in welchem er sich mit grundsätzlich im Wesentlichen gleichmäßiger Geschwindigkeit über den zu verdichtenden Untergrund bewegt. Die Zeitpunkte t₁, t₂, t₃, t₄, t₅ und t₆ bezeichnen jeweils Anfangs- bzw. Endzeitpunkte jeweiliger Perioden P₁, P₂, P₃, P₄ und P₅, wobei jede dieser Perioden eine volle Umdrehung einer Verdichterwalze als periodisch sich wiederholendes Ereignis repräsentiert, z. B. erfasst durch einen Näherungsschalter oder dergleichen. Für die im Folgenden beschriebene Vorgehensweise zur Korrektur des Messwerteverlaufs M hinsichtlich darin enthaltener Messartefakte wird auf diese den im Wesentlichen konstanten Bewegungszustand repräsentierenden Intervalle bzw. Perioden P₁ bis P₅ zugegriffen.

Der im Verlaufe der Bewegung eines Bodenverdichters auftretenden periodischen Rotationsbewegung einer Verdichterwalze sind verschiedene andere Bewegungen überlagert. So wird beispielsweise durch einen im Inneren der Verdichterwalze enthaltenen Oszillationsmechanismus der gleichmäßigen Rotationsbewegung der Verdichterwalze um ihre Drehachse eine vergleichsweise hochfrequente Oszillationsbewegung überlagert. Diese hochfrequente Oszillationsbewegung führt zu vergleichsweise hohen Umfangsbeschleunigungen der Verdichterwalze, die sich im Messwerteverlauf M der Fig. 1 durch das zwischen den Zeitpunkten t₁ und t₆ vergleichsweise hohe Niveau des Messwerteverlaufs M wiederspiegeln. Der Rotation um die Verdichterwalze und der dieser Rotation überlagerten Oszillationsbewegung ist weiterhin ein periodisches Muster überlagert, welches sich in Fig. 1 in den Perioden P₁ bis P₅ als nahezu sinusartiger Verlauf des Messwerteverlaufs darstellt. Dieser als Messartefakt zu betrachtende Bewegungsanteil resultiert aus bei einer derartigen Verdichterwalze unvermeidbar vorhandenen statisehen bzw. dynamischen Unwuchten die bei der Rotationsbewegung der Verdichterwalze um ihre Drehachse im Allgemeinen auch mit der selben Frequenz wie diese Rotationsbewegung auftreten. Auch dies zeigt sich in Fig. 1.

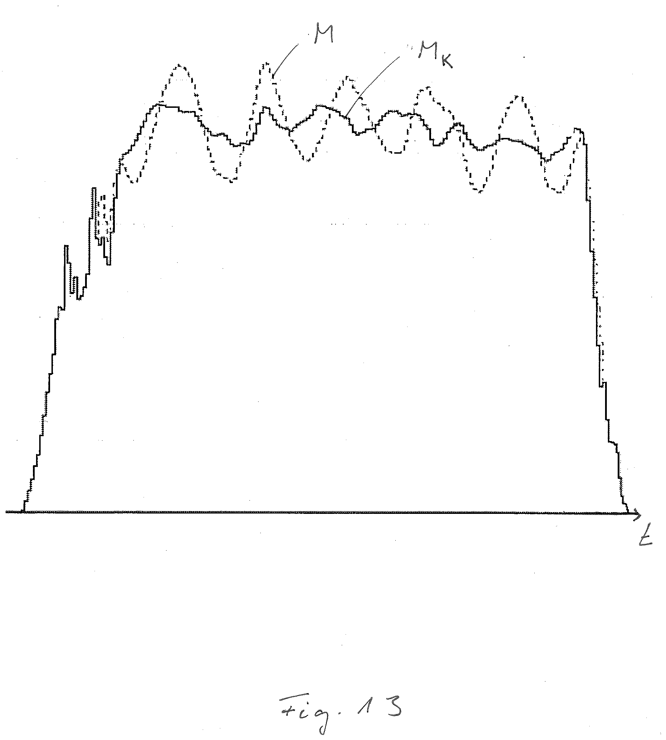

Um den beispielsweise aus einer Vielzahl von einzelnen Messpunkten zusammengesetzten Messwerteverlauf M für die Ermittlung des Verdichtungsgrades des zu verdichtenden Untergrunds auswerten zu können, ist es erforderlich, derartige Messartefakte zu eliminieren, d. h., so weit als möglich aus dem Messwerteverlauf zu entfernen. Hierzu werden erfindungsgemäß nachfolgend beschriebene Verfahrensmaßnahmen durchgeführt, um aus dem Messwerteverlauf M einen in Fig. 13 auch dargestellten korrigierten Messwerteverlauf M_{K} zu erhalten.

Für diese Korrektur wird aus dem in Fig. 1 dargestellten Messwerteverlauf M derjenige Teil herausgegriffen, in welchem das Signal bzw. der Messwerteverlauf M grundsätzlich zur weitergehenden Auswertung sinnvoll nutzbar ist. Das heißt, die vor dem Zeitpunkt t₁ und nach dem Zeitpunkt t₆ vorhandenen Abschnitte des Messwerteverlaufs M werden bei der weitergehenden Auswertung nicht berücksichtigt. Kriterium für diese Auswahl kann beispielsweise das Erreichen bzw. Beibehalten eines bestimmten im Wesentlichen konstanten bzw. in einem begrenzten Wertebereich liegenden Geschwindigkeitsniveaus bei der Voranbewegung eines Bodenverdichters sein. Es ist darauf hinzuweisen, dass selbstverständlich auch nur ein Teilausschnitt eines über eine längere Zeitdauer sich erstreckenden Messwerteverlaufs M mit einer Mehrzahl von unmittelbar aufeinander folgenden Perioden P herausgegriffen werden kann. Für das folgende Beispiel wird auf die Perioden P₁ bis P₅ zwischen den Zeitpunkten t₁ bis t₆ zurückgegriffen.

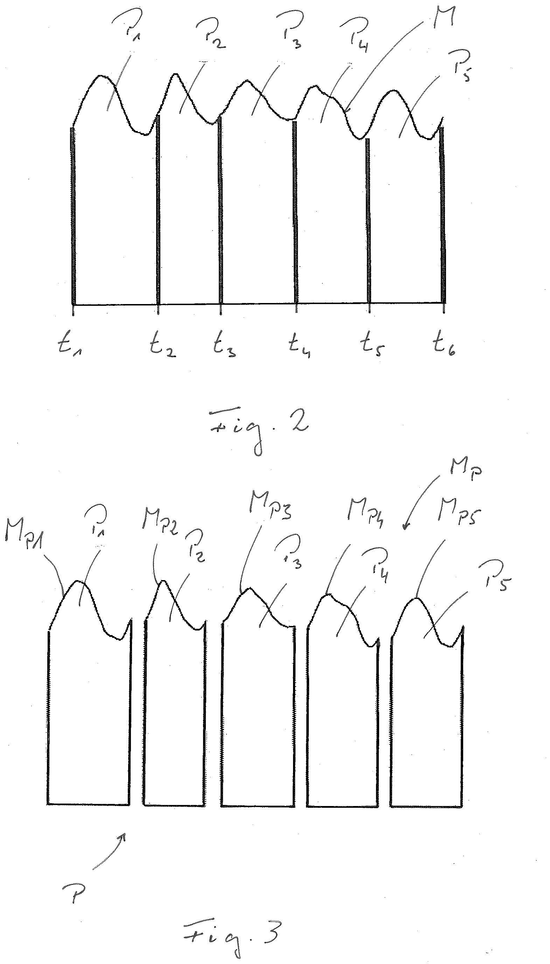

Die Fig. 3 veranschaulicht zunächst, dass der Messwerteverlauf M in diese Mehrzahl an Perioden P, hier insgesamt fünf Perioden, aufgegliedert wird. Jeder dieser Perioden P₁ bis P₅ ist ein Teilabschnitt des Messwerteverlaufs M zugeordnet, im Folgenden allgemein als M_{P} bzw. in Zuordnung zu den einzelnen Perioden P₁ bis P₅ als M_{P1} bis M_{P5} bezeichnet.

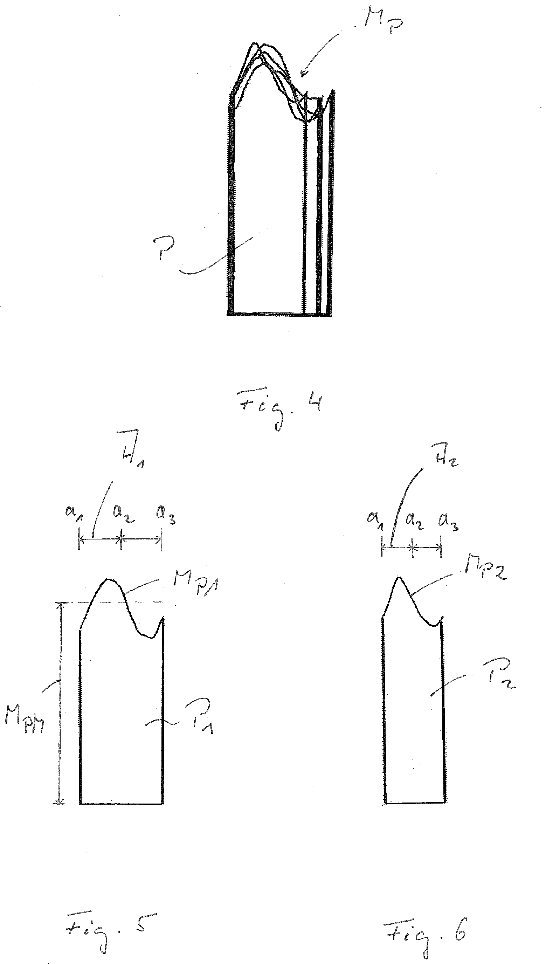

In Fig. 4 sind die fünf Perioden P₁ bis P₅, allgemein als Perioden P bezeichnet, mit ihren Messwerteverläufen M_{P} einander überlagert dargestellt. Man erkennt deutlich, dass die Perioden P unterschiedlich lang sind, also bei Auftragung über der Zeit unterschiedliche Zeitdauern aufweisen. Dies kann einerseits daraus resultieren, dass ein Bodenverdichter sich nicht immer mit exakt konstanter Geschwindigkeit voranbewegt. Andererseits kann, insbesondere auch hervorgerufen durch die hochfrequente Oszillationsbewegung, Schlupf auftreten, was gleichermaßen die Zeitdauer einer vollständigen Umdrehung beeinflusst.

Um für die nachfolgende Auswertung bzw. Korrektur des Messwerteverlaufs M die einzelnen Perioden P zugeordneten Perioden-Messwerteverläufe M_{P} nutzen zu können, wird erfindungsgemäß zunächst eine Längennormierung der einzelnen Perioden P bzw. der diesen zugeordneten Messwerteverläufen M_{P} durchgeführt. Dies wird nachfolgend mit Bezug auf die Fig. 5 bis 7 erläutert.

Die Fig. 5 und 6 zeigen beispielhaft die Perioden P₁ und P₂ mit zueinander deutlich unterschiedlicher Periodenlänge bzw. Periodendauer. Erfindungsgemäß wird zur Durchführung der Längennormierung zunächst eine definierte Anzahl an Abtastungen bestimmt. Im folgenden Beispiel sind dies beispielsweise drei Abtastungen a₁, a₂, a₃. Selbstverständlich wird bei Durchführung des erfindungsgemäßen Verfahrens eine deutlich größere Anzahl an Abtastungen zu verwenden sein. Vorteilhafterweise sollte die vorbestimmte Anzahl an Abtastungen mindestens der Anzahl an Messwerten bzw. Messpunkten desjenigen Perioden-Messwerteverlaufs mit den meisten Messwerten bzw. Messpunkten entsprechen. Jeder der Perioden-Messwerteverläufe M_{P1}, M_{P2} wird mit dieser Anzahl an Abtastungen, hier drei Abtastungen, äquidistant abgetastet, wobei sinnvollerweise die erste Abtastung dem Anfangspunkt eines jeweiligen Messwerteverlaufs M_{P} zugeordnet ist und die letzte Abtastung dem Endpunkt eines entsprechenden Messwerteverlaufs M_{P} zugeordnet ist. Die dazwischenliegenden Abtastungen weisen zu unmittelbar benachbarten Abtastungen immer exakt den gleichen Abstand A₁ bzw. A₂ auf, was dazu führt, dass der gegenseitige Abstand der Abtastungen a₁ bis a₃ beim Perioden-Messwerteverlauf M_{P1} größer sein wird, als bei Perioden-Messwerteverlauf M_{P2}. Aus jeder dieser Abtastungen a₁ bis a3 wird ein Abtastergebnis, also ein Wert aus dem jeweiligen Periode-Messwerteverlauf M_{P} erhalten, wobei ein derartiger Wert beispielsweise einem im jeweiligen Perioden-Messwerteverlauf M_{P} enthaltenen oder nächstgelegenen Messwert entsprechen kann oder durch Interpolation zwischen zwei im jeweiligen Messwerteverlauf enthaltenen Messwerten erhalten werden kann.

In Zuordnung zu jedem so abgetasteten Perioden-Messwerteverlauf M_{P} wird nachfolgend zwischen die dabei jeweils erhaltenen Abtastergebnisse ein vordefiniertes Intervall L_{I} eingefügt, so dass durch das aufeinander folgende Anordnen der einzelnen Abtastergebnisse der verschiedenen Perioden-Messwerteverläufe M_{P} jeweils beabstandet mit dem Intervall L_{I} längennormierte Perioden-Messwerteverläufe M_{PL} erhalten werden, die einerseits jeweils die gleiche Anzahl an einzelnen Messwerten, nämlich jeweiligen Abtastergebnissen, aufweisen, und bei denen andererseits derartige Messwerte bzw. Abtastergebnisse zu unmittelbar benachbarten Messwerten bzw. Abtastergebnissen jeweils den gleichen Abstand L_{I} aufweisen werden, so dass alle längennormierten Perioden-Messwerteverläufe M_{PL} sich über die gleiche Länge bzw. Zeitdauer einer aus der Längennormierung sich ergebenden, längennormierten Periode P_{L} erstrecken.

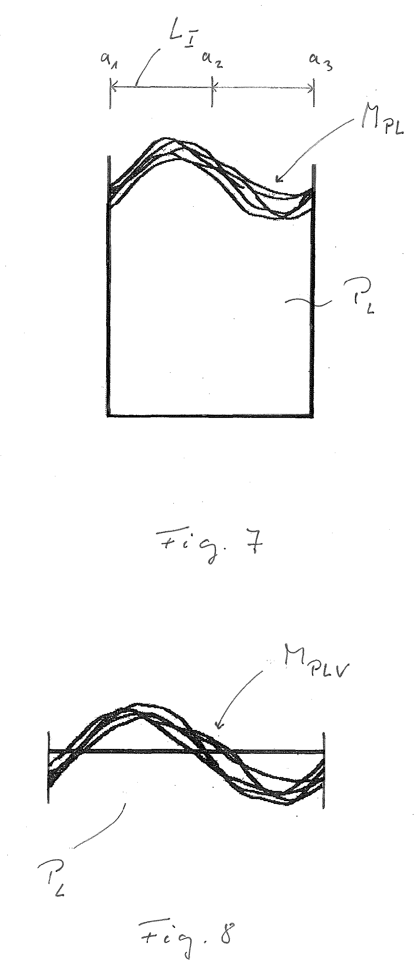

Die so längennormierten Messwerteverläufe M_{PL} werden dann verschoben, und zwar jeweils um einen für jede Periode P und dem dieser zugeordneten Perioden-Messwerteverlauf M_{P} zu ermittelnden Perioden-Messwerteverlaufsmittelwert M_{PM}, welcher auch in Fig. 5 dargestellt ist. Durch diese Verschiebung wird eine in Fig. 8 dargestellte Schar an längennormierten und in Richtung Nullpunkt verschobenen Perioden-Messwerteverläufen M_{PLV} erhalten.

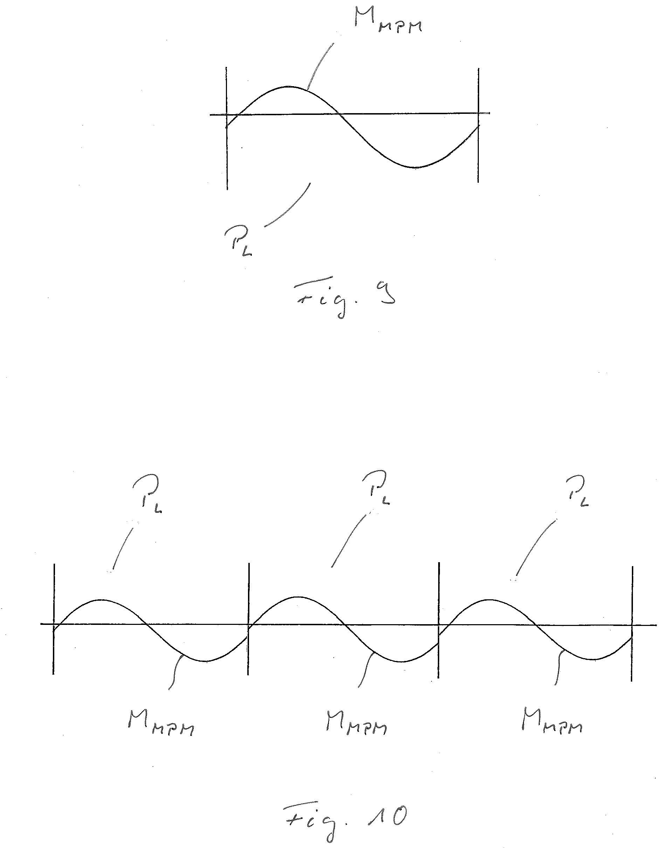

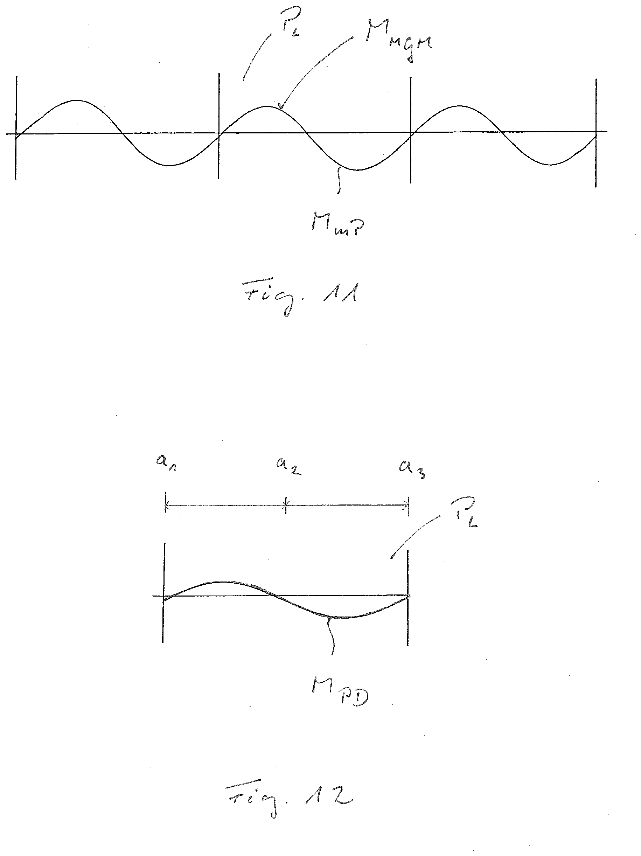

Aus all diesen in Fig. 8 dargestellten längennormierten und verschobenen Perioden-Messwerteverläufen M_{PLV} wird beispielsweise durch Bestimmen des arithmetischen Mittels ein in Fig. 9 dargestellter Mittelwert-Perioden-Messwerteverlauf M_{MPM} für die fiktive, längennormierte Periode P_{L} ermittelt. Eine Mehrzahl dieser Mittelwert-Perioden-Messwerteverläufe M_{MPM} wird in einer Mehrzahl aneinander angefügter längennormierter Perioden P_{L} unmittelbar aufeinander folgend angeordnet, so wie in Fig. 10 dargestellt. Wie in Fig. 10 auch deutlich erkennbar, führt dies dazu, dass an den jeweiligen Periodengrenzen die Anfangs- und Endpunkte der unmittelbar aufeinander folgend angeordneten Mittelwert-Perioden-Messwerteverläufe M_{MPM} nicht stetig aneinander anschließen, was daraus resultiert, dass bei den einzelnen Perioden-Messwerteverläufen M_{P} und dementsprechend auch bei dem daraus ermittelten Mittelwert-Perioden-Messwerteverlauf M_{MPM} Anfangs- und Endwert zueinander unterschiedlich sind. Um hier einen stetigen Verlauf zu erreichen, kann mit herkömmlichen Fittingmethoden eine Anpassung der aufeinander folgend angeordneten Mittelwert-Perioden-Messwerteverläufe M_{MPM} erhalten werden, um somit einen in Fig. 11 dargestellten stetigen Mittelwert-Gesamt-Messwerteverlauf M_{MGM} für eine Mehrzahl von aufeinander folgenden, längennormierten Perioden P_{L} zu erhalten.

Aus dem in Fig. 11 dargestellten Mittelwert-Gesamt-Messwerteverlauf M_{MGM} wird ein Abschnitt herausgegriffen, welcher einer der längennormierten Perioden P_{L} zugeordnet ist. Hier wird vorteilhafterweise auf eine längennormierte Periode P_{L} zugegriffen, die zwischen zwei anderen derartigen Perioden liegt, so dass sichergestellt ist, dass der herausgegriffene Abschnitt des Mittelwert-Gesamt-Messwerteverlaufs M_{MGM} am Anfangs- und am Endpunkt jeweils durch die vorangehend angesprochene Anpassung bearbeitet wurde mit der Folge, dass der Anfangspunkt und der Endpunkt dieses als mittlerer Perioden-Messwerteverlaufs M_{mP} herausgegriffenen Abschnitts auf gleichem Niveau liegen.

Mit diesem für eine längennormierte Periode P_{L} bestimmten bzw. herausgegriffenen mittleren Perioden-Messwerteverlauf M_{mP} wird dann für die einzelnen Perioden P₁ bis P₅ bzw. deren längennormierte und verschobene Perioden-Messwerteverläufe M_{PLV} die eigentliche Korrektur dadurch durchgeführt, dass eine Differenz zwischen den jeweiligen längennormierten und verschobenen Perioden-Messwerteverläufen M_{PLV} und dem mittleren Perioden-Messwerteverlauf M_{mP} ermittelt wird. Ein derartiger durch Differenzbildung generierter Differenz-Perioden-Messwerteverlauf M_{PD} ist in Fig. 12 beispielsweise für die in diesem Falle als längennormierte Periode P_{L} herausgegriffene erste Periode P₁ veranschaulicht. Es ist darauf hinzuweisen, dass eine entsprechende Operation auch für alle anderen Perioden P₂ bis P₅ durchzuführen ist und somit in Zuordnung zu jeder dieser Periode ein Diffenz-Perioden-Messwerteverlauf erhalten wird. Es liegt dann in Zuordnung zu jeder der Perioden P₁ bis P₅ ein derartiger Differenz-Perioden-Messwerteverlauf vor.

Um aus diesen einzelnen Differenz-Perioden-Messwerteverläufen den in Fig. 13 dargestellten korrigierten Messwerteverlauf M_{K} zu erhalten, ist es zunächst erforderlich, die vorangehend durchgeführte Längennormierung ebenso wie die vorangehend durchgeführte Verschiebung wieder rückgängig zu machen. Die Rücklängennormierung der einzelnen Differenz-Perioden-Messwerteverläufe kann dadurch erfolgen, dass diese mit der gleichen vorbestimmten Anzahl an äquidistanten Abtastungen, hier a₁ bis a₃, abgetastet werden, wie vorangehend die Perioden-Messwerteverläufe M_{P} zur Längennormierung abgetastet wurden. Die mit diesen Abtastungen a₁ bis a₃ in Zuordnung zu den verschiedenen Differenz-Perioden-Messwerteverläufen M_{PD} erhaltenen Abtastergebnisse werden dann mit dem gegenseitigen Abstand zueinander angeordnet, der im Zuge der Längennormierung zwischen den einzelnen Abtastungen a₁ bis a₃ der einzelnen Perioden-Messwerteverläufe M_{P} lag. In dem in Fig. 5 und Fig. 6 dargestellten Beispiel waren dies in Zuordnung zu den Perioden P₁ und P₂ die Abstände A₁ und A₂. Auf diese Art und Weise wird in Zuordnung zu jeder Periode P die zuvor durchgeführte Längennormierung wieder rückgängig gemacht, so dass für jeden dieser Perioden P, im dargestellten Beispiel also P₁ bis P₅, ein rücklängennormierter Differenz-Perioden-Messwerteverlauf erhalten wird. Jeder dieser rücklängennormierten Differenz-Perioden-Messwerteverläufe wird dann mit dem in Zuordnung zu jeder einzelnen Periode P zuvor ermittelten Perioden-Messwerteverlaufsmittelwert M_{PM} (siehe Fig. 5) rückverschoben. Aufgrund der vorangehend durchgeführten Operationen ist dabei gewährleistet, dass die dann wieder auf das Ausgangsniveau zurückverschobenen Differenz-Perioden-Messwerteverläufe bei aufeinander folgendem Anordnen stetig aneinander anschließen. Durch dieses aufeinander folgende Anordnen der in Zuordnung zu den einzelnen Perioden P erhaltenen rücklängennormierten und rückverschobenen Differenz-Perioden-Messwerteverläufe wird ein Differenz-Gesamt-Messwerteverlauf erhalten, der dem korrigierten Messwerteverlauf M_{K} entspricht, wobei ein derartiger Verlauf im Wesentlichen nur für die Zeitdauer vorliegt, über welche die vorangehend ausgewerteten Perioden in ihrer Gesamtheit sich erstrecken. Für die Zeitdauern davor bzw. danach, im dargestellten Beispiel also vor t₁ und nach t₆, kann der korrigierte Messwerteverlauf M_{K} beispielsweise als dem Ausgangsmesswerteverlauf M entsprechend definiert werden.

Die Fig. 13 zeigt, dass im korrigierten Messwerteverlauf M_{K} ein deutlich geringerer periodischer Überlagerungsanteil enthalten ist, als in dem als Ausgangspunkt verwendeten Messwerteverlauf M. Dies hat zur Folge, dass der korrigierte Messwerteverlauf M_{K} sich wesentlich besser zur weitergehenden Analyse insbesondere hinsichtlich der Ermittlung des Verdichtungsgrades des zu verdichtenden Untergrunds eignet.

Es sei abschließend darauf hingewiesen, dass selbstverständlich bei der vorangehend beschriebenen Vorgehensweise zum Korrigieren eines Messwerteverlaufs in verschiedenster Weise Variationen vorgenommen werden können, ohne vom Grundprinzip der vorliegenden Erfindung abzuweichen. So kann beispielsweise die Verschiebung bzw. Rückverschiebung eines jeweiligen Messwerteverlaufs vor der Längennormierung bzw. Rücklängennormierung erfolgen. Auch können insbesondere für die Längennormierung bzw. Rücklängennormierung andere auswertungstechnische Methoden verwendet werden, um dafür zu sorgen, dass die verschiedenen Perioden zugeordneten Perioden-Messwerteverläufe auf die gleiche Länge gestreckt bzw. gestaucht werden.

## Patentansprüche

1. Verfahren zur Korrektur eines Messwerteverlaufs durch das Eliminieren periodisch auftretender Messartefakte bei einem die Bewegung einer Verdichterwalze eines Bodenverdichters repräsentierenden Messwerteverlauf, umfassend die Maßnahmen:
a) Bereitstellen eines ein periodisch sich wiederholendes Ereignis repräsentierenden Messwerteverlaufs (M),
b) Aufteilen des Messwerteverlaufs (M) in einer Mehrzahl von aufeinander folgenden Perioden (P) des periodisch sich wiederholenden Ereignisses zugeordnete Perioden-Messwerteverläufe (M_{P}), wobei die Maßnahme b) eine Maßnahme b2) umfasst zum Subtrahieren eines für jeden Perioden-Messwerteverlauf (M_{P}) ermittelten Perioden-Messwerteverlaufsmittelwertes (M_{PM}) von dem zugeordneten Perioden-Messwerteverlauf (M_{P}) zum Bereitstellen von verschobenen Perioden-Messwerteverläufen (M_{PLV}),
c) beruhend auf den der Mehrzahl von Perioden (P) zugeordneten Perioden-Messwerteverläufen (M_{P}), Ermitteln eines mittleren Perioden-Messwerteverlaufs (M_{mP}),
d) Bilden einer Differenz zwischen den der Mehrzahl von Perioden (P) zugeordneten Perioden-Messwerteverläufen (Mp) und dem mittleren Perioden-Messwerteverlauf (M_{mP}) zum Bereitstellen von den Perioden (P) jeweils zugeordneten Differenz-Perioden-Messwerteverläufen (M_{PD}),
e) beruhend auf den Differenz-Perioden-Messwerteverläufen (M_{PD}), Bestimmen eines korrigierten Messwerteverlaufs (M_{K}) für die Mehrzahl aufeinander folgender Perioden (P) des periodisch sich wiederholenden Ereignisses, wobei die Maßnahme e) eine Maßnahme e1) umfasst zum Ermitteln rückverschobener Differenz-Perioden-Messwerteverläufe durch Addieren der Differenz-Perioden-Messwerteverläufe (M_{PD}) jeweils mit dem für die zugeordnete Periode (P) bei der Maßnahme b2) ermittelten Perioden-Messwerteverlaufsmittelwert (M_{PM}).

2. Verfahren nach Anspruch 1,
**dadurch gekennzeichnet, dass** die Mehrzahl von Perioden (P) Perioden (P) unterschiedlicher Periodenlänge umfasst, und dass die Maßnahme b) eine Maßnahme b1) umfasst zum Längennormieren der Perioden-Messwerteverläufe (M_{P}) zum Bereitstellen von über eine gleiche Länge sich erstreckenden längennormierten Perioden-Messwerteverläufen (M_{PL}).

3. Verfahren nach Anspruch 2,
**dadurch gekennzeichnet, dass** die Maßnahme b1) das Abtasten der Perioden-Messwerteverläufe (P_{M}) jeweils mit einer für alle Perioden-Messwerteverläufe gleichen vorbestimmten Anzahl an äquidistanten Abtastungen (a₁, a₂, a₃) umfasst, und dass beruhend auf den bei jedem Perioden-Messwerteverlauf (Mp) erhaltenen Abtastergebnissen längennormierte Perioden-Messwerteverläufe (M_{PL}) durch für alle Perioden-Messwerteverläufe (M_{P}) äquidistantes aufeinander folgendes Anordnen der Abtastergebnisse derselben ermittelt werden.

4. Verfahren nach Anspruch 2 oder 3,
**dadurch gekennzeichnet, dass** bei der Maßnahme c) die längennormierten oder/und verschobenen Perioden-Messwerteverläufe (M_{PLV}) zum Ermitteln des mittleren Perioden-Messwerteverlaufs (M_{mP}) verwendet werden.

5. Verfahren nach einem der Ansprüche 1 bis 4,
**dadurch gekennzeichnet, dass** die Maßnahme c) eine Maßnahme c1) umfasst zum Bereitstellen eines Mittelwert-Perioden-Messwerteverlaufs (M_{MPM}) durch Bilden eines Mittelwertes, vorzugsweise arithmetischen Mittelwertes, aus der Mehrzahl von Perioden-Messwerteverläufen (M_{P}).

6. Verfahren nach Anspruch 5,
**dadurch gekennzeichnet, dass** die Maßnahme c) eine Maßnahme c2) umfasst zum Aneinanderfügen mehrerer Mittelwert-Perioden-Messwerteverläufe (M_{MPM}) und zum Aneinanderanpassen unmittelbar aufeinander folgender Mittelwert-Perioden-Messwerteverläufe (M_{MPM}) an den Angrenzungsstellen zum Bereitstellen eines über eine Mehrzahl von, wenigstens drei, Perioden stetig verlaufenden Mittelwert-Gesamt-Messwerteverlaufs (MMGM).

7. Verfahren nach Anspruch 6,
**dadurch gekennzeichnet, dass** die Maßnahme c) eine Maßnahme c3) umfasst zum Bestimmen des einer Periode des Mittelwert-Gesamt-Messwerteverlaufs (M_{MGM}) zugeordneten Messwerteverlaufs als mittleren Perioden-Messwerteverlauf (M_{mP}).

8. Verfahren nach Anspruch 7,
**dadurch gekennzeichnet, dass** bei der Maßnahme c3) auf eine Periode zugegriffen wird, an die beidseits jeweils eine andere Periode angrenzt.

9. Verfahren nach Anspruch 2 oder nach einem der Ansprüche 3 bis 8, sofern auf Anspruch 2 rückbezogen,
**dadurch gekennzeichnet, dass** die Maßnahme e) eine Maßnahme e2) umfasst zum Rücklängennormieren der Differenz-Perioden-Messwerteverläufe (M_{PD}) derart, dass die Länge jedes rücklängennormierten Differenz-Perioden-Messwerteverlaufs der Länge des in Zuordnung zu einer jeweiligen Periode bestimmten Perioden-Messwerteverlaufs (Mp) vor Durchführung der Maßnahme b1) entspricht.

10. Verfahren nach Anspruch 3 und Anspruch 9,
**dadurch gekennzeichnet, dass** bei der Maßnahme e2) jeder Differenz-Perioden-Messwerteverlauf (M_{PD}) mit der vorbestimmten Anzahl äquidistant abgetastet wird, und dass die bei jedem Differenz-Perioden-Messwerteverlauf (M_{PD}) erhaltenen Abtastergebnisse mit einem Abstand (A₁, A₂) aufeinander folgend angeordnet werden, welcher Abstand dem Abstand der äquidistanten Abtastungen (a₁, a₂, a₃) bei der Maßnahme b1) entspricht.

11. Verfahren nach einem der Ansprüche 1 bis 10,
**dadurch gekennzeichnet, dass** die Maßnahme e) eine Maßnahme e3) umfasst zum Bereitstellen eines über die Mehrzahl von Perioden (P) sich erstreckenden Differenz-Gesamt-Messwerteverlaufs als korrigierter Messwerteverlauf (M_{K}) durch aufeinander folgendes Anordnen der für die Perioden ermittelten Differenz-Perioden-Messwerteverläufe (M_{PD}).

12. Verfahren nach Anspruch 3 und Anspruch 9,
**dadurch gekennzeichnet, dass** bei der Maßnahme e3) die rückverschobenen oder/und rücklängennormierten Differenz-Perioden-Messwerteverläufe zum Ermitteln des Differenz-Gesamt-Messwerteverlaufs verwendet werden.

## Claims

1. A method for the correction of a measured value curve by the elimination of periodically occurring measurement artefacts for a measured value curve representing the motion of a compactor roller of a soil compactor, comprising the actions:
a) provision of a measured value curve (M) representing a periodically repeating event,
b) division of the measured value curve (M) into period-measured value curves (M_{P}) allocated to a plurality of successive periods of the periodically repeating event, wherein the action b) comprises an action b2) for the subtraction of a period-measured value curve mean value (M_{PM}) determined for each period-measured value curve (M_{P}) from the allocated period-measured value curve (M_{P}) for the provision of displaced period-measured value curves (M_{PLV}).
c) based on the period-measured value curves allocated to the plurality of periods (P), determination of a mean period-measured value curve (M_{mP}),
d) formation of a difference between the period-measured value curves (M_{P}) allocated to the plurality of periods (P), and the mean period-measured value curve (M_{mP}) for the provision of the difference-period-measured value curves (M_{PD}) allocated in each case to the periods (P),
e) based on the difference period-measured value curves (M_{PD}), determination of a corrected measured value curve (M_{K}) for the plurality of successive periods (P) of the periodically repeating event, wherein the action e) comprises an action e1) for the determination of back-displaced difference-period-measured value curves by adding the difference-period-measured value curve (M_{PD}) each with the period-measured value curve mean (M_{PM}) determined for the allocated period (P) in the action b2).

2. Method according to claim 1,
**characterized in that** the plurality of periods (P) comprises periods (P) of different period lengths, and that the action b) comprises an action b1) for normalizing the length of the period-measured value curves (M_{P}) for the provision of length-normalized period-measured value curves (M_{PL}) extending over an equal length.

3. Method according to claim 2,
**characterized in that** the action b1) comprises the sampling of the period-measured value curves (P_{M}), each with a predetermined, equal number of equidistant samplings (a₁, a₂, a₃) for all period-measured value curves, and that, based on the sampling results obtained in each period-measured value curve (M_{P}), length-normalized period-measured value curves (M_{PL}) are obtained by means of an equidistant successive arrangement of the sampling results thereof for all period-measured value curves (M_{P}).

4. Method according to claim 2 or 3,
**characterized in that** in the action c), the length-normalized or/and displaced period-measured value curves (M_{PLV}) are used to determine the mean period-measured value curve (M_{mP}).

5. Method according to one of claims 1 to 4,
**characterized in that** the action c) comprises an action c1) for the provision of a mean period-measured value curve (M_{MPM}) by forming a mean, preferentially an arithmetic mean, from the plurality of period-measured value curves (M_{P}).

6. Method according to claim 5,
**characterized in that** the action c) comprises an action c2) for joining several mean-period-measured value curves (M_{MPM}) and for fitting directly successive mean-period-measured value curves (M_{MPM}) to one another at the interfaces for the provision of a mean-total-measured value curve (M_{MGM}) running continuously over a plurality of at least three periods.

7. Method according to claim 6,
**characterized in that** the action c) comprises an action c3) for the determination of the measured value curve allocated to a period of the mean-total measured value curve (M_{MGM}) as a mean period-measured value curve (M_{mP}).

8. Method according to claim 7,
**characterized in that** in the action c3), a period is accessed to which another period is adjacent on both sides.

9. Method according to claim 2, or one of the claims 3 to 8, if referring back to claim 2 **characterized in that** the action e) comprises an action e2) for back length normalization of the difference-period-measured value curves (M_{PD}) such that the length of each back length-normalized difference-period-measured value curve corresponds to the length of the period-measured value curve (M_{P}) defined in allocation to a respective period before implementing the action b1).

10. Method according to claim 3 and claim 9,
**characterized in that** in the action e2), each difference-period-measured value curve (M_{PD}) is sampled equidistantly with the predetermined number, and that the sampling results for each difference-period-measured value curve (M_{PD}) are arranged successively at a distance (A₁, A₂), which distance corresponds to the distance of the equidistant samplings (a₁, a₂, a₃) in the action b1).

11. Method according to claims 1 to 10,
**characterized in that** the action e) comprises an action e3) for the provision of a difference-total-measured value curve extending over the plurality of periods (P) as a corrected measured value curve (M_{K}) by successively arranging the difference-period-measured value curves (M_{PD}) determined for the periods.

12. Method according to claim 3 and claim 9,
**characterized in that** in the action e3), the back-displaced or/and back length-normalized difference-period-measured value curves are used to determine the difference-total-measured value curve.

## Revendications

1. Procédé pour la correction d'une courbe de mesures par l'élimination d'artéfacts de mesure survenant régulièrement lors d'une courbe de mesures représentant le mouvement d'un rouleau compacteur d'un compacteur de sol, comprenant les actions suivantes :
a) Prévoir une courbe de mesures (M) représentant un événement se reproduisant périodiquement,
b) Diviser la courbe de mesures (M) en des courbes de mesures de période (M_{P}) associées à une pluralité de périodes successives (P) de l'évènement se reproduisant périodiquement, où l'action b) comprend une action b2) pour soustraire une valeur moyenne de courbe de mesures de période (M_{PM}) déterminée pour chaque courbe de mesures de période (M_{P}) de la courbe de mesures de période (M_{P}) associée pour prévoir des courbes de mesures de période décalées (M_{PLV}),
c) basé sur les courbes de mesures de période (M_{P}) associées à la pluralité de périodes successives (P) déterminer une courbe moyenne de mesures de période (M_{mP}),
d) former une différence entre les courbes de mesures de période (M_{P}) associées à la pluralité de périodes successives (P) et la courbe moyenne de mesures de période (M_{mP}) pour prévoir des courbes de mesures de période de différence (M_{PD}) associées respectivement aux périodes (P),
e) sur la base des courbes de mesures de période de différence (M_{PD}) déterminer une courbe de mesures corrigée (M_{K}) pour la pluralité de périodes successives (P) de l'évènement se reproduisant périodiquement, la mesure e) comprenant une mesure e1) pour déterminer des courbes de mesures de période de différence décalées en arrière par l'addition des courbes de mesures de période de différence (M_{PD}) respectivement avec la valeur moyenne de courbe de mesures de période (M_{PM}) déterminée pour la période (P) associée lors de l'action b2).

2. Procédé selon la revendication 1,
**caractérisé en ce que** la pluralité de périodes (P) comprend des périodes (P) de longueurs de période différentes et **en ce que** l'action b) comprend une action b1) pour normaliser la longueur des courbes de mesures de période (M_{P}) pour prévoir des courbes de mesures de période de longueur normalisée (M_{PL}) s'étendant sur une même longueur.

3. Procédé selon la revendication 2,
**caractérisé en ce que** l'action b1) comprend l'échantillonnage des courbes de mesures de période (P_{M}) respectivement avec, pour toutes les courbes de mesure de période, un même nombre prédéterminé d'échantillonnages équidistants (a₁, a₂, a₃) et **en ce que** basé sur les résultats d'échantillonnage obtenus pour chaque courbe de mesures de période (P_{M}) des courbes de mesures de période de longueur normalisée (M_{PL}) sont déterminées par l'arrangement successif des résultats d'échantillonnage équidistant pour toutes les courbes de mesures de période (P_{M}).

4. Procédé selon la revendication 2 ou 3,
**caractérisé en ce que** lors de l'action c) les courbes de mesures de période de longueur normalisée ou/et décalées (M_{PLV}) sont utilisées pour déterminer la courbe moyenne de mesures de période (M_{mP}).

5. Procédé selon une des revendications 1 à 4,
**caractérisé en ce que** l'action c) comprend une action c1) pour prévoir une courbe de mesures de période moyenne (M_{MPM}) en formant une valeur moyenne, de préférence une valeur moyenne arithmétique sur la base de la pluralité de courbes de mesures de période (M_{P}).

6. Procédé selon la revendication 5,
**caractérisé en ce que** l'action c) comprend une action c2) pour assembler plusieurs courbes de mesures de période moyenne (M_{MPM}) et pour adapter des courbes de mesures de période moyenne (M_{MPM}) directement successives aux interfaces pour prévoir une courbe totale de mesures de période moyenne (M_{MGM}) continue sur une pluralité, au moins trois périodes.

7. Procédé selon la revendication 6,
**caractérisé en ce que** l'action c) comprend une action c3) pour déterminer la courbe de mesures associée à une période de la courbe totale de mesures de période moyenne (M_{MGM}) en tant que courbe de mesures de période moyenne (M_{mP}).

8. Procédé selon la revendication 7,
**caractérisé en ce que** lors de l'action c3) on utilise une période avec respectivement une période adjacente des deux côtés.

9. Procédé selon la revendication 2, ou selon une des revendications 3 à 8, si elles se réfèrent à la revendication 2,
**caractérisé en ce que** l'action e) comprend une action e2) de normalisation de longueur arrière des courbes de mesures de période de différence (M_{PD}) de sorte que la longueur de chaque courbe de mesures de période de différence avec normalisation de longueur arrière correspond à la longueur de la courbe de mesures de période (M_{P}) déterminée en association à une période respective avant la réalisation de l'action b1).

10. Procédé selon la revendication 3 et la revendication 9,
**caractérisé en ce que** lors de l'action e2) chaque courbe de mesures de période de différence (M_{PD}) est échantillonnée de manière équidistante avec le nombre prédéterminé et **en ce que** les résultats d'échantillonnage obtenus pour chaque courbe de mesures de période de différence (M_{PD}) sont arrangés de manière successive avec une distance (A₁, A₂), cette différence correspondant à la différence des échantillonages équidistants (a₁, a₂, a₃) lors de l'action b1).

11. Procédé selon une des revendications 1 à 10,
**caractérisé en ce que** l'action e) comprend une action e3) pour prévoir une courbe de mesures totale de différence s'étendant sur la pluralité de périodes (P) en tant que courbe de mesures corrigée (M_{K}) par un arrangement successif des courbes de mesures de période de différence (M_{PD}) déterminées pour les périodes.

12. Procédé selon la revendication 3 et la revendication 9,
**caractérisé en ce que** lors de l'action e3) les courbes de mesures de période de différence décalées en arrière ou/et normalisé de longueur en arrière sont utilisées pour déterminer la courbe totale de mesures de différence.
